# EUROPEAN PATENT APPLICATION

(11) **EP 3 819 086 A1**
(43) Date of publication of application: **12.05.2021**
(21) Application number: 20205499.5
(22) Date of filing: 03.11.2020
(51) Int. Cl.: B25J 9/08

(54) **MODULAR GRIPPER TOOLING**

(30) Priority: 07.11.2019 US 201962932097 P
(71) Applicant: PHD, Inc., Fort Wayne, IN 46809 (US)
(72) Inventor: ELDER, Daniel L., Yoder, IN 46798 (US); NULL, Lyle A., Markle, IN 46770 (US); WILLIAMS, Matthew R., Fort Wayne, IN 46816 (US)
(74) Representative: Blumbach · Zinngrebe Patentanwälte PartG mbB

(57) **Abstract**

A gripper includes at least one tooling member including: a base; a distal segment coupled to the base and configured to grip a workpiece; a series of identical intermediate segments coupling the base to the distal segment, each of the intermediate segments being coupled to at least one other intermediate segment; and a fastener coupling two adjacent intermediate segments together. The fastener defines a first position where the coupled adjacent intermediate segments are articulationally and translationally locked to one another and a second position where the coupled adjacent intermediate segments are translationally locked to and articulationally unlocked from one another.

## Description

### Cross-Reference to Related Applications

This is a non-provisional application based upon U.S. provisional patent application serial no. 62/932,097, entitled "AUTONOMOUSLY ENCAPSULATING GRIPPER TOOLING", filed November 7, 2019, which is incorporated herein by reference.

### BACKGROUND OF THE INVENTION

### 1. Field of the Invention

The present invention relates to gripper tooling, and, more particularly, to modular gripper tooling.

### 2. Description of the Related Art

Grippers are mechanical devices which generally include jaws that are moved together or apart by motive devices, such as electric motors or pneumatic pistons. Tooling is typically fastened to the jaw to provide some degree of conformal contact between the surface of the tool and one or more surfaces of a gripped workpiece. Once the jaws have moved the fastened tooling into a position of contact with the gripped workpiece, the jaws produce a force against the tooling which is transferred by the tooling to retain the workpiece so that the position of the workpiece might be subsequently translated or rotated. It is often desirable that the tooling fully or partially encapsulate the profile of the workpiece to prevent relative motion from occurring between the workpiece and tooling as the workpiece is subsequently translated or rotated or external forces are applied to the workpiece.

It is known in the art to construct the tooling with a complimentary contacting surface profile which corresponds to the profile of the workpiece to better encapsulate a gripped workpiece. This method of encapsulation typically renders the tooling suitable for gripping only a single shape of workpiece or a series of similarly shaped workpieces that share a common surface profile. Generally, tooling must be removed and replaced if a noncompatible shape of workpiece is to be subsequently gripped, resulting in an undesirable increase in downtime and reduced throughput for the manufacturing or material handing operation of which the gripper is a part.

What is needed in the art is a cost-effective gripper tooling for easily accommodating the shape of the workpiece and gripping the workpiece.

### SUMMARY OF THE INVENTION

The present invention provides a gripper tooling capable of being rapidly configured and adjusted to conform to the gripped profile of the workpiece, so as to encapsulate a broad spectrum of shapes and sizes of workpieces. The gripper tooling furthermore comprises modules which can be selected, assembled, and adjusted as desired to best conform to the gripped profile of the workpiece and to locate the workpiece in a desired position relative to the gripper.

The invention in one form is directed to a gripper, comprising: at least one tooling member comprising a base, a distal segment coupled to the base and configured to grip a workpiece, a series of identical intermediate segments coupling the base to the distal segment, each of the intermediate segments being coupled to at least one other intermediate segment; and a fastener coupling two adjacent intermediate segments together, the fastener defining a first position where the coupled adjacent intermediate segments are articulationally and translationally locked to one another and a second position where the coupled adjacent intermediate segments are translationally locked to and articulationally unlocked from one another.

Each of the intermediate segments may comprise a clevis portion and a tang, the fastener coupling the clevis portion of one of the coupled adjacent intermediate segments to the tang of the other coupled adjacent intermediate segment.

A nut might be coupled to the fastener, the fastener and the nut compressing the clevis portion against the tang when the fastener is in the first position to articulationally and translationally lock the coupled adjacent intermediate segments to one another.

The tang might comprise a first pair of aligned openings and a second pair of aligned openings formed therein, the aligned openings of the first pair defining a first opening axis that is non-parallel to a second opening axis defined by the aligned openings of the second pair.

In some embodiments, the first opening axis and the second opening axis are orthogonal to one another.

The clevis portion and the tang each may comprise teeth formed therein, the teeth of the clevis portion and the tang of the coupled adjacent intermediate segments interlocking together when the fastener is in the first position to prevent rotation between the coupled adjacent intermediate segments.

In the preferred embodiments disclosed herein, the intermediate segments may comprise a first intermediate segment coupled to the base by a base fastener, the base fastener defining a first position where the first intermediate segment and the base are translationally and articulationally locked and a second position where the first intermediate segment is translationally locked to and articulationally unlocked from the base.

Also, the first intermediate segment may comprises a tang and the base may comprise a clevis portion coupled to the tang by the base fastener.

The intermediate segments may comprise a second intermediate segment coupled to the distal segment by a distal fastener, the distal fastener defining a first position where the second intermediate segment and the distal segment are translationally and articulationally locked and a second position where the second intermediate segment is translationally locked to and articulationally unlocked from the distal segment.

Similarly as mentioned above, the second intermediate segment may comprise a clevis portion and the distal segment may comprise a tang coupled to the clevis portion by the distal fastener.

In general, the at least one tooling member may comprise a pair of tooling members.

In a preferred embodiment, the invention is directed to a gripper tooling including a gripper having a gripper body and at least one jaw connected and linearly sliding relative to the gripper body, at least one base segment connected to the at least one jaw, at least one intermediate segment of selectable length connected to the at least one base segment, and at least one articulated joint between the at least one base and the at least one intermediate segment.

The invention in another form is directed in a preferred further embodiment to a gripper tooling including a gripper having a gripper body and at least one jaw connected and linearly sliding relative to the gripper body, at least one base segment connected to the at least one jaw, at least one intermediate segment of selectable length connected to the at least one base segment, at least one distal segment configured for gripping a workpiece, at least one articulated joint between the at least one base and the at least one intermediate segment, and at least one articulated joint between the at least one intermediate segment and the at least one distal segment.

Preferably, the at least one base segment, the at least one intermediate segment of selectable length connected to the at least one base segment, at least one distal segment configured for gripping a workpiece, at least one articulated joint between the at least one base and the at least one intermediate segment, and at least one articulated joint between the at least one intermediate segment and the at least one distal segment. Each segment incorporating a way to retain the at least one articulated joint between the base and intermediate segments and the at least one articulated joint between the intermediate and distal segment at a selected angle between the respective segments. Each segment also including a way to prevent rotation beyond a selected angle between the respective segments. Each segment further including a way to selectively allow the articulated joint to rotate or selectively prevent the joint from rotating.

In some exemplary embodiments provided according to the present invention, a gripper includes at least one tooling member including: a base; a distal segment coupled to the base and configured to grip a workpiece; a series of identical intermediate segments coupling the base to the distal segment, each of the intermediate segments being coupled to at least one other intermediate segment; and a fastener coupling two adjacent intermediate segments together. The fastener defines a first position where the coupled adjacent intermediate segments are articulationally and translationally locked to one another and a second position where the coupled adjacent intermediate segments are translationally locked to and articulationally unlocked from one another.

In some exemplary embodiments provided according to the present invention, a method of adjusting a gripper is provided. The gripper includes at least one tooling member including a base coupled to a distal segment by a series of identical intermediate segments that are translationally and articulationally locked to one another, the distal segment being configured to grip a work piece. The method includes moving a fastener coupling a first intermediate segment of the intermediate segments to an adjacent second intermediate segment of the intermediate segments from a first position to a second position to unlock the first intermediate segment from the second intermediate segment and altering a position of the distal segment. An altering according to this method includes at least one of: articulating the first intermediate segment relative to the second intermediate segment; uncoupling the first intermediate segment from the second intermediate segment, rotating the first intermediate segment, and re-coupling the rotated first intermediate segment to the second intermediate segment; uncoupling the first intermediate segment from the second intermediate segment, removing the second intermediate segment from the series of intermediate segments, and coupling the first intermediate segment to at least one of the base, the distal segment, or another one of the intermediate segments; or uncoupling the first intermediate segment from the second intermediate segment and coupling an additional intermediate segment to the first intermediate segment and the second intermediate segment.

In some exemplary embodiments provided according to the present invention, a gripper includes at least one tooling member. The at least one tooling member includes: a base; a segment coupled to the base and configured to grip a workpiece; and a fastener coupling the segment to the base, the fastener defining a first position where the segment is articulationally and translationally locked to the base and a second position where the segment is translationally locked to and articulationally unlocked from the base.

An advantage of the present invention is that the modular gripper tooling is selectively configurable and adjustable, to easily and effectively encapsulate a plethora of differently-shaped workpieces.

Another advantage of the present invention is that the modular gripper tooling can be easily and efficiently attached to numerous types of gripper jaws by only changing the mounting pattern of the gripper tooling base segment to match the mounting pattern of the gripper jaws.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 is a perspective view of an embodiment of a gripper tooling having identical left and right tooling members according to the present invention;
FIG. 2 is a perspective view of another embodiment of a gripper tooling having identical left and right tooling members according to the present invention;
FIG. 3 is an exploded view of the left tooling member of FIG. 2;
FIG. 4 is a perspective view of yet another embodiment of a left tooling member;
FIG. 5 is a front view of the tooling member of FIG. 4;
FIG. 6 is a cross-sectional view of the left tooling member, taken across line 6-6 in FIG. 5;
FIG. 7 is a cross-sectional view of the left tooling member, taken across line 7-7 in FIG. 5;
FIG. 8 is an exploded view of the tooling member of FIG. 4;
FIG. 9 is a left and front view of a component of the tooling member of FIG. 4;
FIG. 10 is perspective view of two of the components of FIG. 9, joined in a first orientation;
FIG. 11 is a perspective view of two of the components of FIG. 9, joined in a second orientation;
FIG. 12 is a perspective view of another embodiment of a component of the tooling member of FIG. 4;
FIG. 13 is a perspective view of another embodiment of a component of the tooling member of FIG. 4;
FIG. 14 is a perspective view of another embodiment of a component of the tooling member of FIG. 4;
FIG. 15 is a perspective view of another embodiment of a component of the tooling member of FIG. 4; and
FIG. 16 is a flow chart illustrating an exemplary embodiment of a method of adjusting a gripper, provided according to the present invention.

Corresponding reference characters indicate corresponding parts throughout the several views. The exemplifications set out herein illustrate embodiments of the invention and such exemplifications are not to be construed as limiting the scope of the invention in any manner.

### DETAILED DESCRIPTION OF THE INVENTION

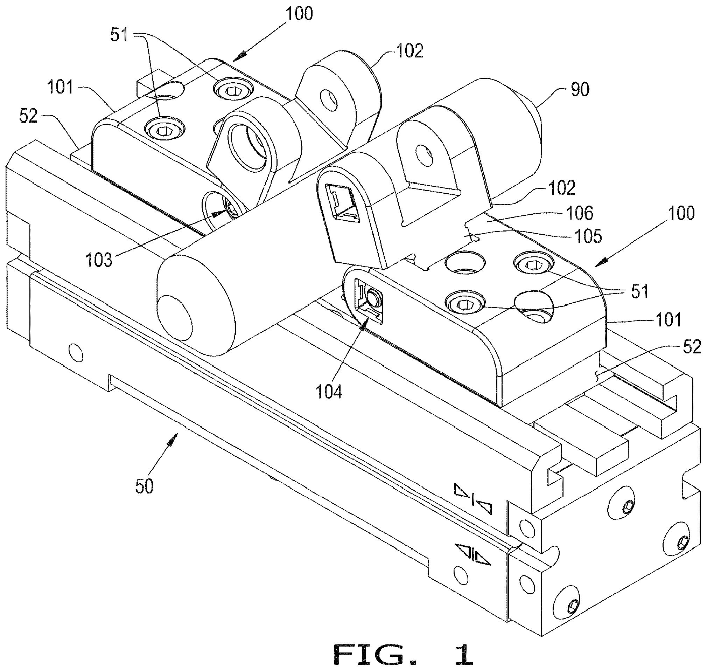

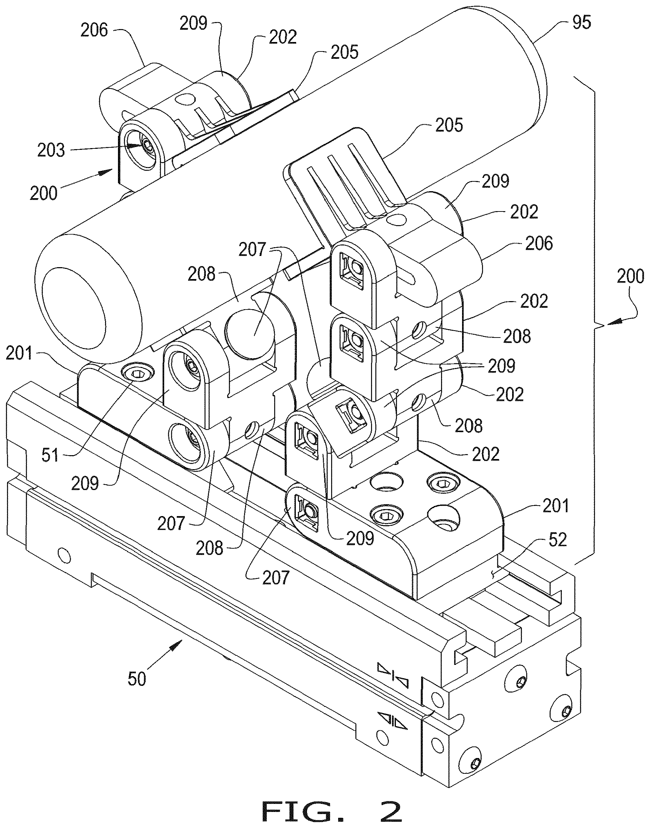

Referring now to the drawings, and more particularly to FIG. 1, there is shown one exemplary embodiment of a gripper tooling mounted to an illustrative gripper with parallel jaw travel 50, such as the GRH series gripper manufactured by the PHD Corporation. The gripper includes at least one tooling member, illustrated as a pair of identical left and right tooling members 100 each comprising a base 101 attached to slidable gripper jaws 52 with fasteners 51. The tooling members 100 may be translated toward or away from one another. Single segment 102 is attached to base 101 with threaded fastener 103 and threaded nut 104, with fastener 103 passing through a complimentary hole through tang portion 105 of segment 102 to engage nut 104, with nut 104 having been press-fit into a complimentary recess in base 101. Although a nut 104 with a square profile is shown press-fit into base 101, it is understood that a nut with a hexagonal profile may also be used in conjunction with a suitable complimentary recess in base 101. It should be understood by one skilled in the art that action of threading fastener 103 into nut 104 compresses the sides of a clevis portion 106 formed at the ends of base 101 against the tang 105 protruding from the bottom of segment 102, the resulting friction between the clevis portion 106 and tang 105 preventing subsequent rotation of the segment 102 with respect to the base 101. In other words, the friction resulting from the fastener 103 being in a first position translationally and articulationally locks segment 102 to base 101. In this manner, fastener 103 can be partially unthreaded from nut 104 by moving to a second position to open the clearance between the clevis portion 106 of the base 101 and the tang 105 of the segment 102 to allow the segment 102 to be selectively rotated to a desired position with respect to base 101, *i.e*., articulationally unlocked from the base 101, and subsequently restrained from rotation by the action of threading fastener 103 into nut 104 to return to the first position, allowing each segment 102 to be articulationally positioned so as to contact and retain workpiece 90 when gripper jaws 52 move towards one another. While the segment 102 illustrated in FIG. 1 is similar to intermediate segments 202 illustrated in, for example, FIG. 2 and described further herein, the segment 102 may also be provided in the embodiment of a distal segment 205, 305, 405, 505, 605, 705 configured to grip a workpiece, as will be described further herein.

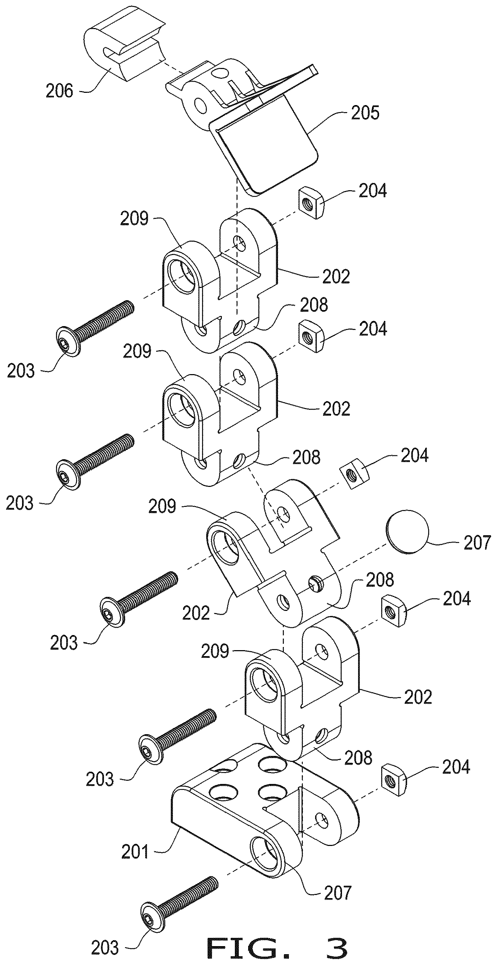

Referring now to FIGS. 2-3, there is shown another exemplary embodiment of the gripper tooling mounted to an illustrative gripper with parallel jaw travel 50, such as the GRH series gripper manufactured by the PHD Corporation. The gripper includes at least one tooling member, illustrated as a pair of identical left and right tooling members 200 each comprising a base 201 attached to slidable gripper jaws 52 with fasteners 51. The tooling members 200 may translate toward or away from one another. A plurality of intermediate segments 202 are attached to base 201 with threaded fasteners 203 and threaded nuts 204, with nut 204 press-fit into a complimentary recess in segment 202. Although a nut 204 with a square profile is shown press-fit into segment 202, it is understood that a nut with a hexagonal profile may also be used in conjunction with a suitable complimentary recess in segment 202. It is also understood that although intermediate segments 202 are shown as being of identical length and construction, *i.e.,* identical, segments of differing lengths may be used. It will be further understood that the quantity of the intermediate segments can be increased or decreased as to best accommodate the desired position of the gripped workpiece relative to the gripper 50 and that left and right tooling members 200 need not be of identical construction and may comprise differing quantities and lengths of intermediate segments 202. In other words, the configuration of the left and right tooling members 200 may be adjusted by adding, removing, and/or orienting intermediate segments 202. It should be understood by one skilled in the art that action of threading fastener 203 into nut 204 to a first position compresses the sides of a clevis portion 207 formed at the ends of base 201 against a tang 208 protruding from the bottom of segment 202, the resulting friction between the clevis portion 207 and tang 208 preventing subsequent translation and rotation of the segment 202 with respect to the base 201, *i.e.,* the segment 202 is translationally and articulationally locked to the base 201 by the fastener 203 in the first position. In this manner, fastener 203 can be partially unthreaded from nut 204 to move the fastener 203 to a second position and open the clearance between the clevis portion 207 of the base 201 and the tang 208 of the segment 202 to allow the segment 202 to be selectively rotated to a desired position with respect to base 201 and subsequently restrained from rotation by the action of threading fastener 203 into nut 204. It should also be understood that an analogous clevis and tang arrangement between a clevis portion 209 of each segment 202 and the tang 208 of an adjoining segment 202, which may also be referred to as an "adjacent coupled intermediate segment," allows each intermediate segment 202 to be selectively rotated to a desired position with respect to the adjoining segment and subsequently restrained from rotation by the action of threading fastener 203 into nut 204 to the first position. In other words, two adjacent coupled intermediate segments 202 are translationally and articulationally locked to one another when the fastener 203 is in the first position and are translationally locked to and articulationally unlocked from one another when the fastener 203 is in the second position.

Distal segment 205 may terminate the plurality of segments 202 and may contain geometry specific to retaining workpiece 95, when gripper jaws 52 are moved towards one another. In other words, the distal segment 205 may be coupled to the base 201 by a series of the intermediate segments 202, which are each coupled to at least one other intermediate segment 202. In some embodiments, the distal segment 205 is directly coupled to the base 201. The distal segments 205 of each tooling member 200 may face the distal segment 205 of the other tooling member 200 so a workpiece can be gripped between the distal segments 205. Distal segment 205 may comprise an additional tip 206 constructed from a compliant material, so that the distal segment 205 may be positioned to bring the compliant tip 206 into contact with a differently profiled workpiece, substituted for workpiece 95. In this manner, distal segment 205 with tip 206 offers the advantage of gripping workpieces of differing size and shape. In an analogous manner to the clevis portion 209 and tang 208 of segments 202, the clevis portion 209 of segment 202 in contact with distal segment 205 allows for the selective rotation and subsequent retention of the distal segment 205 relative to intermediate segment 202 by the unthreading and threading of fastener 203 into nut 204.

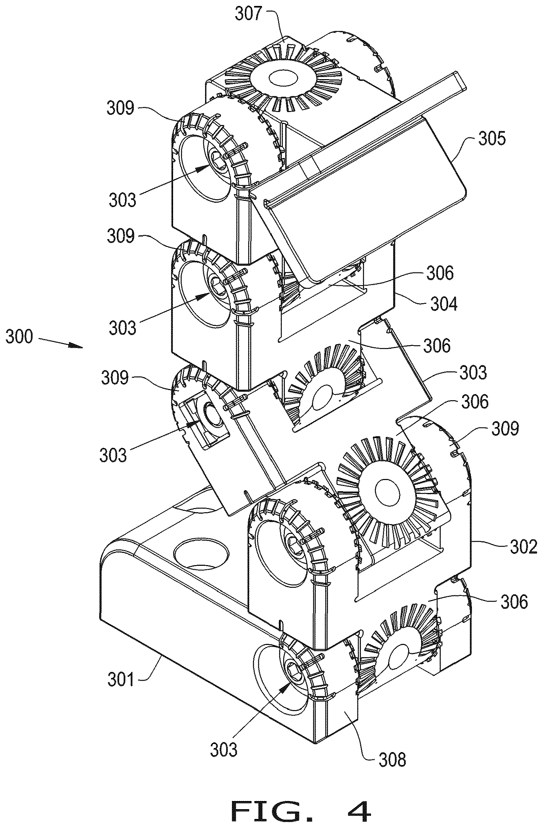

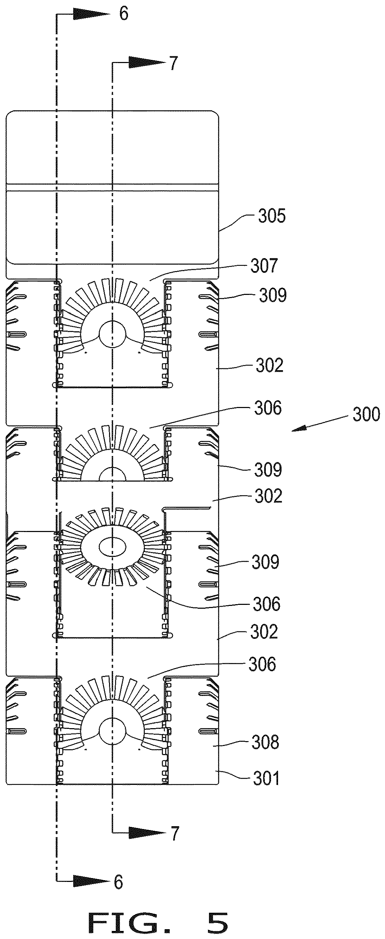

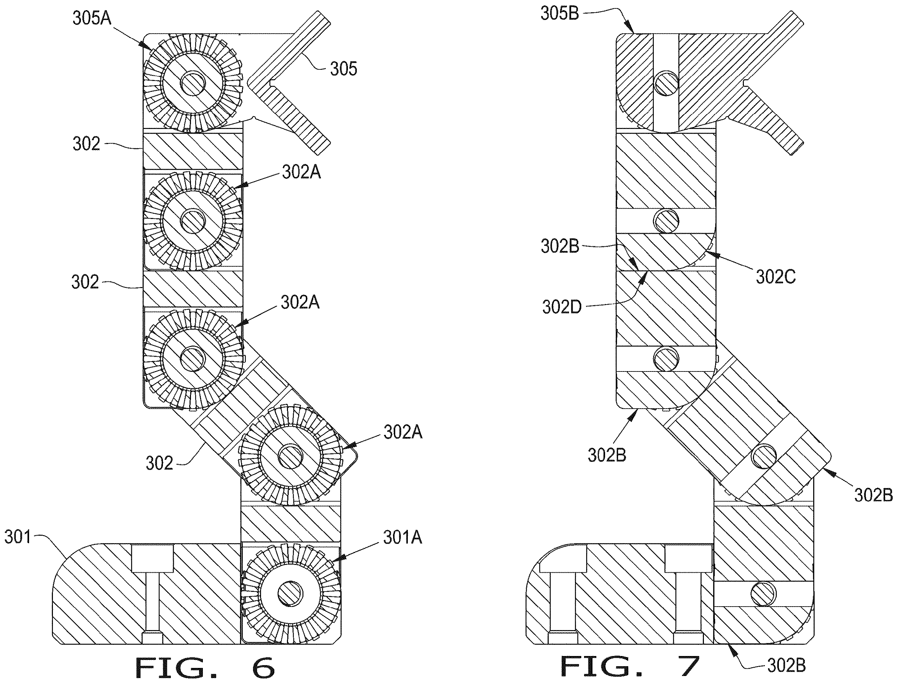

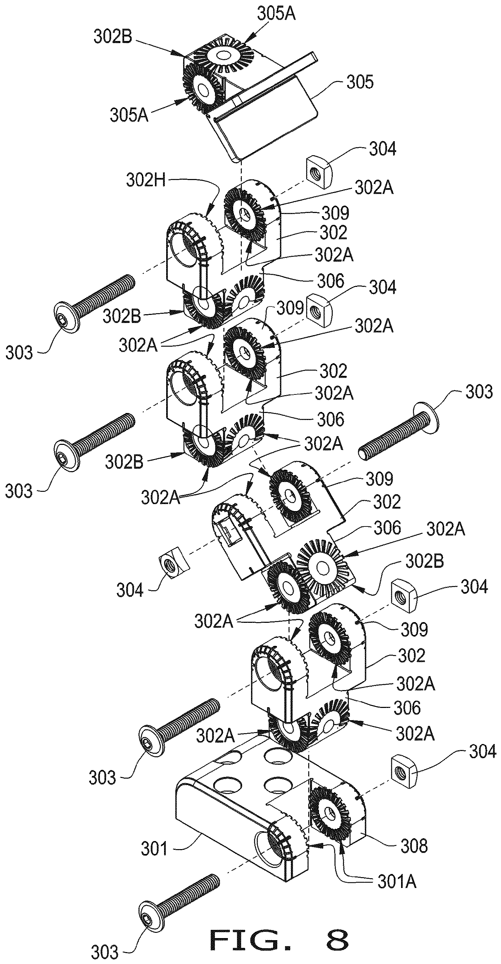

Referring now to FIGS. 4-11, there is shown yet another exemplary embodiment of a gripper tooling member 300 comprising a base 301 attached to a slidable gripper jaw (not shown). A plurality of intermediate segments 302 are attached to base 301 with threaded fasteners 303 and threaded nuts 304, with nut 304 having been press-fit into a complimentary recess in segment 302. Although a nut 304 with a square profile is shown press-fit into segment 302, it is understood that a nut with a hexagonal profile may also be used in conjunction with a suitable complimentary recess in segment 302. It is also understood that although intermediate segments 302 are shown as being of identical length and construction, *i.e.,* identical, segments of differing lengths may be used. It will be further understood that the quantity of the intermediate segments 302 can be increased or decreased as to best accommodate the desired position of the gripped workpiece relative to the gripper. Features may be incorporated onto the four surfaces of a tang portion 306, 307 of intermediate segments 302 and distal segment 305 and the two sides of a clevis portion 308, 309 of base 301 and intermediate segments 302 to improve the retention of segments 302 relative to each other, between the distal segment 305 and the adjoining intermediate segment 302, and between the base 301 and the adjoining intermediate segment 302. These features may take the form of 301A, 302A, and 305A (FIG. 6 and FIG. 8), comprising teeth having a series of alternating protruding radial ribs and complimentary valleys and may also include circular center ribs and complimentary valleys, such that the ribs on a first component may penetrate into and engage the valleys of a second adjoining component at the same time as the ribs of the second component penetrate into and engage the valleys of the first component. In this manner, the ribs and valleys of the teeth of the two adjoining components interlock to prevent the rotation of one component relative to the other component. It should be understood by one skilled in the art that action of threading fastener 303 into nut 304 compresses the sides of the clevis portion 308 formed at the ends of base 301 until the ribs and valleys 301A of the teeth on the sides of the base clevis portion 308 engage and interlock with the complimentary ribs and valleys 302A of the teeth on the tang 306 protruding from the bottom of segment 302, preventing subsequent rotation of the segment 302 with respect to the base 301. In this manner, fastener 303 can be partially unthreaded from nut 304 and moved from a first position to a second position to open the clearance between the clevis portion 308 of the base 301 and the tang 306 of the segment 302 and allow the segment 302 to be selectively rotated to a desired position with respect to base 301 and subsequently restrained from rotation by the action of threading fastener 303 into nut 304 to the first position. It should also be understood that an analogous features 302A on the clevis and tang arrangement between the clevis portion 309 of each segment 302 and the tang 306 of an adjoining segment 302 allows each intermediate segment 302 to be selectively rotated to a desired position with respect to the adjoining segment 302 and subsequently restrained from rotation by the action of threading fastener 303 into nut 304 to the first position.

Distal segment 305 may terminate the plurality of segments 302 and may contain geometry specific to retaining a workpiece (not shown), when the gripper jaws (not shown) are moved towards one another. Thus, the distal segment 305 may be coupled to the base 301 by a series of the intermediate segments 302, similar to the previously described embodiment of FIGS. 2-3. It should be appreciated that the distal segment 305 may be directly coupled to the base 301. Distal segment 305 may also include teeth with the sequential alternating rib and valley feature 305A, to enhance the resistance to rotation between distal segment 305 and adjoining intermediate segment 302, in an analogous manner to the action of retention features 301A and 302A.

It may also be desirable to limit the rotation of the intermediate segment 302 adjoining the base 301 with respect to the base 301, the rotation of the intermediate segments 302 with respect to one another, and the rotation of the distal segment 305 with respect to the adjoining intermediate segment 302. Such rotational limiting may be accomplished by incorporating a feature 302B onto the bottom surface of the tang 306 of intermediate segment 302 (FIGS. 7-8). It will be understood by one skilled in the art that the presence of radius 302C on the tang 306 of segment 302 will allow the segment to rotate clockwise with respect to the segment below while the presence of flat surface 302B will prevent the counter-clockwise rotation of the upper segment 302 beyond a position in which the upper and lower segments are in a straight, vertical alignment with one another.

An analogous flat surface 305B may also be incorporated onto the abutting portion of distal segment 305 to prevent counter-clockwise rotation of the distal segment 305 beyond a desired position relative to adjoining intermediate segment 302.

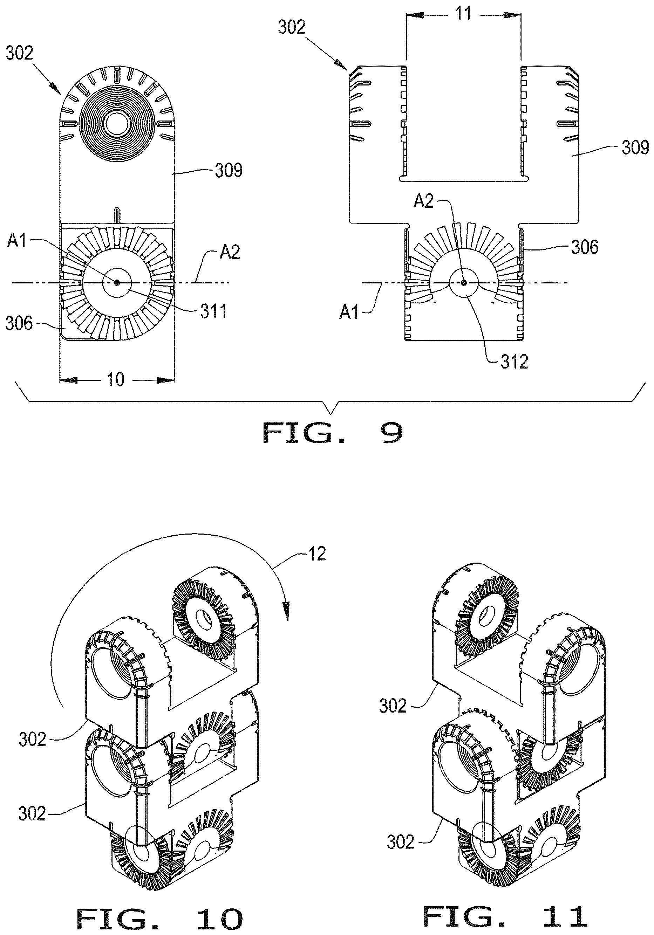

Referring now to FIGS. 9-11, a depth 10 of the tang 306 of intermediate segment 302 may be chosen to closely approximate a width 11 of the clevis portion 309 of segment 302, such that two intermediate segments 302 may be assembled as shown in FIG. 10, so as to allow articulation with respect to one another, or the upper segment may be rotated in the direction of arrow 12 prior to insertion into the adjoining segment, so as to prohibit all articulation of the two coupled segments 302 with respect to one another. Such insertion also provides a desirable way of changing the plane of articulation within a progressive series of intermediate segments 302 by 90 degrees. It is understood that an analogous choice of clevis width can be made for base 301, so as to selectively allow or prevent the articulation of the intermediate segment 302 with respect to the base 301. It is further understood that an analogous choice of the depth of the adjoining portion of distal segment 305 may made so as to selectively allow or prevent the articulation of the distal segment 305 with respect to the adjoining intermediate segment 302, or selectively change by 90 degrees, the orientation of any geometry or features specific to retaining a workpiece.

To allow rotation of the segments 302 by 90 degrees between the two orientations and subsequent locking, the segments 302 may have a first pair of aligned openings 311 and a second pair of aligned openings 312 formed in the tang 306, with each pair of aligned openings 311, 312 configured to receive the fastener 303 therein. The aligned openings 311 may define a first opening axis A1 and the aligned openings 312 may define a second opening axis A2 that is non-parallel to the first opening axis A1, such as orthogonal to the first opening axis A1 as illustrated in FIG. 9.

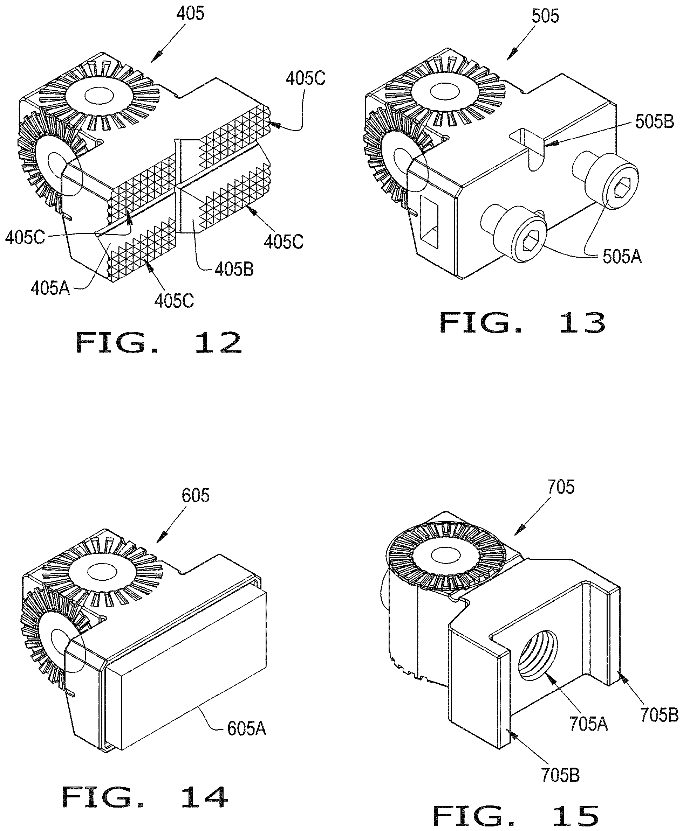

Referring now to FIGS. 12-15, there is shown alternative exemplary embodiments of the distal segment, which may be coupled to the base, directly or indirectly via intermediate segments. Distal segment 405 may have an end face that is configured to engage a workpiece and incorporates orthogonal V-grooves 405A and 405B to promote the gripping and centering of cylindrical objects and checkering 405C to increase the frictional retention of gripped workpieces, as illustrated in FIG. 12. Distal segment 505 may incorporate fasteners 505A and indexing notch 505B in its end face to allow for the attachment of accessory gripping structures, as illustrated in FIG. 13. Distal segment 605 may incorporate compliant pad 605A, to allow the end face of the segment 605 to partially conform to the surface profile of irregularly shaped gripped workpieces, as illustrated in FIG. 14. Distal segment 705 may possess threaded hole 705A and ribs 705B in its end face to allow for the attachment of accessory gripping structures, as illustrated in FIG. 15.

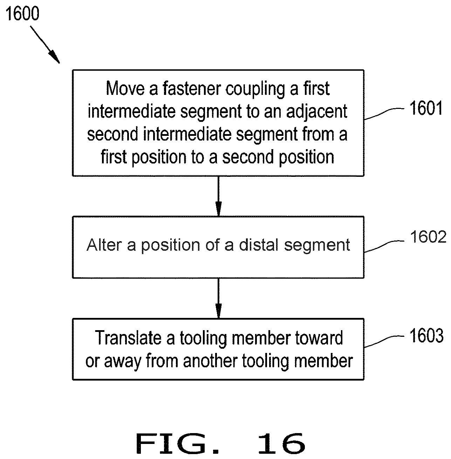

In some exemplary embodiments, and referring now to FIG. 16, a method 1600 of adjusting a gripper is provided. The gripper includes at least one tooling member, such as any one or more of the tooling members 200, 300, that includes the base 201, 301 coupled to the distal segment 205, 305 by a series of identical intermediate segments 202, 302 that are translationally and articulationally locked to one another. The method 1600 includes moving 1601 a fastener 203, 303 coupling a first intermediate segment 202, 302 of the intermediate segments 202, 302 to an adjacent second intermediate segment 202, 302 of the intermediate segments 202, 302. The fastener 203, 303 is moved 1600 from a first position to a second position to unlock the first intermediate segment from the second intermediate segment. The method 1600 further includes altering 1602 a position of the distal segment 205, 305. The altering 1602 includes at least one of: articulating the first intermediate segment 202, 302 relative to the second intermediate segment 202, 302; uncoupling the first intermediate segment 202, 302 from the second intermediate segment 202, 302, rotating the first intermediate segment 202, 302, and re-coupling the rotated first intermediate segment 202, 302 to the second intermediate segment 202, 302; uncoupling the first intermediate segment 202, 302 from the second intermediate segment 202, 302, removing the second intermediate segment from the series of intermediate segments 202, 302, and coupling the first intermediate segment 202, 302 to the base 201, 301, the distal segment 205, 305, and/or another one of the intermediate segments 202, 302; or uncoupling the first intermediate segment 202, 302 from the second intermediate segment 202, 302 and coupling an additional intermediate segment 202, 302 to the first and second intermediate segments 202, 302. Thus, it should be appreciated that the position of the distal segment 205, 305, which is configured to grip a workpiece, can be easily altered 1602 by adjusting the number and/or relative positions of one or more intermediate segments 202, 302 of the series of intermediate segments 202, 302 coupling the distal segment 205, 305 to the base 201, 301. In some embodiments, a pair of tooling members 200, 300 is provided and the altering 1602 comprises altering the position of the distal segment 205, 305 of each of the tooling members 200, 300. In some embodiments, the method 1600 further includes translating 1603 at least one of the tooling members 200, 300 toward or away from the other tooling member 200, 300. The method 1600 provided according to the present invention can thus allow for convenient and easy adjusting of the position of the distal segment(s) 205, 305 of the gripper using identical intermediate segments 202, 302.

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A gripper, comprising:
at least one tooling member comprising:
a base;
a distal segment coupled to the base and configured to grip a workpiece;
a series of identical intermediate segments coupling the base to the distal segment, each of the intermediate segments being coupled to at least one other intermediate segment; and
a fastener coupling two adjacent intermediate segments together, the fastener defining a first position where the coupled adjacent intermediate segments are articulationally and translationally locked to one another and a second position where the coupled adjacent intermediate segments are translationally locked to and articulationally unlocked from one another.

2. The gripper of claim 1, wherein each of the intermediate segments comprises a clevis portion and a tang, the fastener coupling the clevis portion of one of the coupled adjacent intermediate segments to the tang of the other coupled adjacent intermediate segment and
preferably further comprising a nut coupled to the fastener, the fastener and the nut compressing the clevis portion against the tang when the fastener is in the first position to articulationally and translationally lock the coupled adjacent intermediate segments to one another.

3. The gripper of claim 2, wherein the tang has a first pair of aligned openings and a second pair of aligned openings formed therein, the aligned openings of the first pair defining a first opening axis that is non-parallel to a second opening axis defined by the aligned openings of the second pair.

4. The gripper of claim 3, wherein the first opening axis and the second opening axis are orthogonal to one another.

5. The gripper of one of claims 2 to 4, wherein the clevis portion and the tang each comprise teeth formed therein, the teeth of the clevis portion and the tang of the coupled adjacent intermediate segments interlocking together when the fastener is in the first position to prevent rotation between the coupled adjacent intermediate segments.

6. The gripper of one of claims 1 to 5, wherein the intermediate segments comprise a first intermediate segment coupled to the base by a base fastener, the base fastener defining a first position where the first intermediate segment and the base are translationally and articulationally locked and a second position where the first intermediate segment is translationally locked to and articulationally unlocked from the base, wherein preferably the first intermediate segment comprises a tang and the base comprises a clevis portion coupled to the tang by the base fastener.

7. The gripper of one of claims 1 to 6, wherein the intermediate segments comprise a second intermediate segment coupled to the distal segment by a distal fastener, the distal fastener defining a first position where the second intermediate segment and the distal segment are translationally and articulationally locked and a second position where the second intermediate segment is translationally locked to and articulationally unlocked from the distal segment,
wherein preferably the second intermediate segment comprises a clevis portion and the distal segment comprises a tang coupled to the clevis portion by the distal fastener.

8. The gripper of one of claims 1 to 7, wherein the at least one tooling member comprises a pair of tooling members and
wherein the intermediate segments of one of the tooling members preferably are identical to the intermediate segments of the other tooling member.

9. The gripper of claim 7 or 8 wherein the distal segments of the tooling members face each other.

10. The gripper of one of claims 1 to 9, wherein the distal segment comprises an end face configured to engage the workpiece, the end face having two orthogonal and intersecting V- grooves formed therein and
wherein the V- grooves divide the end face into a plurality of distal segment sections, at least one of the distal segment sections having checkering formed therein.

11. A method of adjusting a gripper, the gripper comprising at least one tooling member comprising a base coupled to a distal segment by a series of identical intermediate segments that are translationally and articulationally locked to one another, the distal segment being configured to grip a work piece, the method comprising:
moving a fastener coupling a first intermediate segment of the intermediate segments to an adjacent second intermediate segment of the intermediate segments from a first position to a second position to unlock the first intermediate segment from the second intermediate segment; and
altering a position of the distal segment, the altering comprising at least one of:
articulating the first intermediate segment relative to the second intermediate segment;
uncoupling the first intermediate segment from the second intermediate segment, rotating the first intermediate segment, and re-coupling the rotated first intermediate segment to the second intermediate segment;
uncoupling the first intermediate segment from the second intermediate segment, removing the second intermediate segment from the series of intermediate segments, and coupling the first intermediate segment to at least one of the base, the distal segment, or another one of the intermediate segments; or
uncoupling the first intermediate segment from the second intermediate segment and coupling an additional intermediate segment to the first intermediate segment and the second intermediate segment.

12. The method of claim 11, wherein the at least one tooling member comprises a pair of tooling members.

13. The method of claim 12, wherein the altering comprises altering the position of the distal segment of each of the tooling members.

14. The method of claim 13, further comprising translating at least one of the tooling members toward or away from the other tooling member.

15. A gripper preferably according to one of claims 1 to 10, comprising:
at least one tooling member comprising:
a base;
a segment coupled to the base and configured to grip a workpiece; and
a fastener coupling the segment to the base, the fastener defining a first position where the segment is articulationally and translationally locked to the base and a second position where the segment is translationally locked to and articulationally unlocked from the base.
